(19) Europäisches Patentamt
European Patent Office
Office européen des brevets

(11) EP 3 137 558 B1

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **15717866.6**

(22) Anmeldetag: **17.04.2015**

(51) Int Cl.:
***C09D 4/06*** (2006.01) ***C09D 133/02*** (2006.01)

(86) Internationale Anmeldenummer:
**PCT/EP2015/058363**

(87) Internationale Veröffentlichungsnummer:
**WO 2015/165753 (05.11.2015 Gazette 2015/44)**

(54) **NICHT-WÄSSRIGE ANTIDRÖHNMASSE MIT NICHT-PULVERFÖRMIGEM POLYACRYLATBINDEMITTEL UND RADIKALISCH POLYMERISIERBARER VERBINDUNG**

NON-AQUEOUS VIBRATION DAMPING COMPOSITION WITH NON POWDERY POLYACRYLAT BINDER AND RADICALLY POLYMERISABLE COMPOUND

COMPOSITION NON AQUEUX ANTI BIBRATION AVEC POLYACRYLAT LIANT ET COMPOSITION DE POLYMÉRISATION RADICALAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2014 EP 14166361**

(43) Veröffentlichungstag der Anmeldung:
**08.03.2017 Patentblatt 2017/10**

(73) Patentinhaber: **BASF SE**
**67056 Ludwigshafen am Rhein (DE)**

(72) Erfinder:
- **WULFF, Dirk**
**67105 Schifferstadt (DE)**
- **LICHT, Ulrike**
**68309 Mannheim (DE)**
- **PREISHUBER-PFLUEGL, Peter**
**68219 Mannheim (DE)**

(74) Vertreter: **BASF IP Association**
**BASF SE**
**G-FLP-C006**
**67056 Ludwigshafen (DE)**

(56) Entgegenhaltungen:
**WO-A1-2008/049805 WO-A1-2008/049932**
**WO-A1-2012/168208 WO-A1-2013/174611**
**JP-A- 2001 247 744**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 137 558 B1

## Beschreibung

Die Erfindung betrifft eine nicht-wässrige Antidröhnmasse, enthaltend (a) ein nicht-pulverförmiges Polyacrylatbindemittel mit einem K-Wert im Bereich von 10 bis 35, gemessen als 1%ige Lösung in Tetrahydrofuran; (b) anorganische Füllstoffe; und eine radikalisch polymerisierbare Verbindung, welche mindestens eine radikalisch polymerisierbare C-C-Doppelbindung aufweist und einen Siedepunkt bei Normaldruck von größer 160°C besitzt. Die Erfindung betrifft auch ein Verfahren zur Dämpfung von Vibrationen oder Schwingungen von Bauteilen von Fahrzeugen und Maschinen. Die Polyacrylatbindemittel können als Rohstoff zur Herstellung von Beschichtungsmassen für z.B. den Automobilbau verwendet werden, die zur Schall- und Schwingungsdämpfung geeignet sind.

Oszillierende Fahrzeugteile wie z.B. Motor, Reifen oder Getriebe induzieren Schwingungen der Karosserie, welche zu unangenehmen Dröhngeräuschen innerhalb der Fahrgastzelle führen können. Aus diesem Grund werden Schwingungsdämpfungssysteme gezielt auf betroffene Karosserieflächen aufgetragen. Diese sollen die entstehenden Karosserieschwingungen dämpfen. Als Dämpfungssystem kommen in Europa vornehmlich Bitumenmatten zum Einsatz, welche in einem personalintensiven Arbeitsschritt per Hand in die Karosserie eingelegt und verklebt werden müssen. Seit wenigen Jahren werden alternativ pump- und spritzbare Massen, sogenannte LASD-Massen (liquid applied sound damping), eingesetzt, die per Sprühroboter präzise und schnell appliziert werden können. Im Vergleich zu Bitumenmatten ermöglicht diese Technologie dem Fahrzeughersteller eine Gewichtsersparnis aufgrund höherer Dämpfungseffizenz sprühbarer Systeme. Zudem ist eine Reduzierung von Personal-, Logistik- und Lagerkosten möglich und sorgt für eine Reduzierung von Platzbedarf und Staubbelastung an der Produktionslinie.

Derartige LASD Massen enthalten neben Füllstoffen, die sowohl zur Kostenreduzierung als auch zur Verbesserung der Dämpfung dienen, polymere Anteile. Je nach vorliegender Form kann man diese in wässrige und nicht-wässrige LASD-Systeme unterscheiden. Der polymere Anteil wässriger LASD Massen basiert vorwiegend auf Polyacrylatdispersionen. Das Polyacrylat erfüllt zum einen die Aufgabe des Bindemittels und sorgt zudem für die gewünschten Dämpfungseigenschaften durch Copolymerisation, z.B. mit Styrol oder Vinylacetat oder durch Mischung mit anderen Polymeren wie z.B. Polyurethan, PVC-Plastisol, Silikonen oder Epoxidpolymeren. Dadurch können gewünschte anwendungstechnische Eigenschaften wie z.B. Dämpfungsverhalten oder Wasseraufnahme eingestellt werden. Darüber hinaus ermöglichen Dispersionen eine niedrige Viskosität bei hohen Feststoffgehalten und strukturviskoses Verhalten der LASD-Massen. Dadurch wird bei hohen Scherraten eine Sprühapplikation ermöglicht, im Ruhezustand behält die Masse Formstabilität ohne zu fließen.

Der polymere Anteil nichtwässriger LASD Massen beruht vielfach auf Kautschuken, Epoxidharzen, PVC-Plastisolen, Polyurethanen oder Acrylatpulvern. Die darauf basierenden Massen werden durch das Aufschmelzen der Polymere fließfähig und durch anschließendes Versprühen auf das Substrat appliziert. Massen, die bei Raumtemperatur aufgetragen werden können, enthalten oftmals Weichmacher oder niederviskose Bindemittel, um die Verarbeitung zuzulassen. Diese Varianten benötigen eine nachträgliche Vernetzung durch z.B. epoxidierte Silane, Peroxide oder Reaktion zu Polyurethanen um eine ausreichende Formstabilität zu erhalten. Nicht-wässrige LASD Massen haben den Vorteil, dass sie in den Trockenstufen der Lackiererei zumeist schneller verfestigen und nicht wie im Falle der wässrigen LASD Massen Wasserdampf erzeugen, was zu einer unerwünschten Riss- und Blasenbildung führen kann. Zudem weisen nichtwässrige LASD Massen eine gute Stabilität gegen Feuchtigkeit und eine hohe Abriebfestigkeit auf. Nachteilig, z.B. bei Epoxidharzen kann ein starker Schrumpf sein, der zu einer Verzeichnung im Fahrzeugblech führen kann. PVC-Plastisole haben den Nachteil, dass sie chlorhaltig sind, was häufig unerwünscht ist.

Systeme auf Basis von Polyacrylatpulvern bzw. Polyacrylat-Plastisolen haben den Nachteil, dass hierfür in der Regel Kern-Schale-Harze in Kombination mit relativ hohen Mengen an Weichmachern eingesetzt werden, was diese Systeme relativ teuer macht. Die benötigte Schale der Polymerpartikel hat außerdem in der Regel eine relativ hohe Glasübergangstemperatur, was dazu führen kann, dass die Dämpfungswirksamkeit der Dämpfungsmasse bei höheren Temperaturen begrenzt ist. Außerdem werden die Acrylatpulver in der Regel hergestellt durch Emulsionspolymerisation mit anschließender Sprühtrocknung, wobei die bei der Emulsionspolymerisation verwendeten Emulgatoren in den Polymerpulvern verbleiben und nach der Applizierung an die Oberfläche migrieren können und die Haftung der Dämpfungsmasse am Metall beeinträchtigen können. Acrylat-Plastisole enthalten außerdem eine hohe Menge an Weichmacher bezogen auf die Festmasse, wobei die Weichmacher nicht zur Dämpfungswirkung beitragen. Dies hat eine relativ geringe Dämpfungswirkung pro Masseneinheit zur Folge.

Auf Acrylatdispersionen basierende, wässrige LASD Massen zeichnen sich durch gute Dämpfungseigenschaften aus. Wässrige Systeme sind z.B. beschrieben in EP 1935941. Schwingungsdämpfende Zusammensetzungen auf Basis von wasserbasierten Polymerdispersionen und anorganischen Füllstoffen sowie weiterer Hilfsstoffe sind bekannt aus der EP 1520865, WO 2007/034933, WO 01/90264, DE 10 2006 052 282, EP 2420412 und US2012/027941.

Eine Verbesserung der Dämpfungseffizienz gibt den Automobilherstellern die Möglichkeit, im Vergleich zu Bitumenmatten und nichtwässrigen LASD-Massen, eine Gewichtsersparnis zu realisieren. Daneben haben Dispersionen aufgrund ihrer guten toxikologischen Eigenschaften keine gesundheitsrelevante Bedeutung und können ohne zusätzliche Schutzeinrichtung verarbeitet werden. Nachteilig zeigt sich bei applizierten und getrockneten Massen jedoch eine hohe

Wasseraufnahme, die zu einer Veränderung der Eigenschaften führen kann und die Stabilität und Langlebigkeit der applizierten und getrockneten LASD Massen gefährdet. Ausgelöst wird dieser Hang zur Wasseraufnahme sowohl durch Kapillarkräfte der porösen Masse, als auch durch hydrophile Hilfsstoffe wie Emulgatoren, Dispergierhilfsmittel oder Stabilisatoren. Dämpfungssysteme werden nicht nur im Innenraum des Fahrzeugs eingesetzt, sondern auch im Außenbereich, wie Radkästen, Motorraum oder Klimabox. Diese Bereiche sind hoher Feuchtigkeit ausgesetzt. Die dort eingesetzten Schwingungsdämpfungssysteme benötigen somit eine hohe Resistenz gegen die Wasseraufnahme, Folglich sind diese Bereiche wasserbasierenden LASD Massen bisher nicht zugänglich.

Bitumenmassen haben zwar eine sehr geringe Wasseraufnahme, aber auch eine relativ schlechte Dämpfungswirkung bezogen auf das Auftragsgewicht. Bekannt sind auch wasserfreie, spritzbare Systeme auf Basis von Kautschukmassen. Diese Massen müssen aber mit Schwefel vulkanisiert werden, was zu Geruchsproblemen führen kann.

Neben der Wasseraufnahme stellt die Blasenbildung während der Trocknung für Formulierer von LASD Massen eine große Herausforderung dar. In den Trocknungskanälen der Lackiererei verdampft das Wasser der Masse. Liegt in der trocknenden Masse eine Wasserdampfbarriere vor, so kann daraus eine Riss- und Blasenbildung resultieren. Dabei kommt es vor, das sich Massen von der Karosserie abheben können und durch mangelnden Kontakt mit der Oberfläche keine ausreichende Schwingungsdämpfung erreichen. Außerdem zeigt sich eine solche Blasenbildung als schwerwiegender Fabrikationsfehler, da sich dadurch die Dimensionen der Schalldämmmassen ändern und somit kein gleichmäßiger Prozess möglich ist.

In der WO 2013/174611 werden nicht-wässrige LASD-Massen auf Basis von lösemittelfreien Polyacrylatbindemitteln beschrieben. Aufgrund der Viskosität bei Raumtemperatur sind diese Massen noch nicht optimal für Spritzanwendungen geeignet. Weitere relevante Dokumente sind WO-A-2008/049932 und WO-A-2008/049805, Es bestand die Aufgabe, Antidröhnmassen zur Verfügung zu stellen, welche möglichst gut für Spritzanwendungen geeignet sind, möglichst geringe Viskositäten bei Raumtemperatur aufweisen und gleichzeitig eine möglichst breite Dämpfungswertkurve und möglichst hohe Dämpfungswerte (bezogen auf Auftraggewicht und Feststoffgehalt der LASD-Massen) aufweisen. Außerdem sollten möglichst gute anwendungstechnische Eigenschaften erreicht werden hinsichtlich geringer Wasseraufnahme von applizierten LASD-Massen sowie dem Problem der Blasen- und Rissbildung im Trocknungskanal.

Es wurde gefunden, dass die Aufgabe gelöst wird durch eine nicht-wässrige Antidröhnmasse, enthaltend

(a) mindestens ein nicht-pulverförmiges Polyacrylatbindemittel mit einem K-Wert im Bereich von 10 bis 35, gemessen als 1%ige Lösung in Tetrahydrofuran bei 21°C; und

(b) anorganische Füllstoffe und

(c) mindestens eine radikalisch polymerisierbare Verbindung, welche mindestens eine radikalisch polymerisierbare C-C-Doppelbindung aufweist und einen Siedepunkt bei Normaldruck von größer 160°C, vorzugsweise größer 180 °C besitzt.

Eine bevorzugte Verwendung der erfindungsgemäßen Antidröhnmasse ist die Verwendung zur Schwingungsdämpfung von Karosserieteilen eines Fahrzeugs.

Der Begriff "nicht-wässrig" bedeutet insbesondere, dass keine wässrigen Polymerdispersionen zur Herstellung der Antidröhnmassen eingesetzt werden.

Die Antidröhnmasse ist vorzugsweise lösemittelfrei oder lösemittelarm in dem Sinne, dass es sich um sogenannte "100%-Systeme" handelt, bei denen das polymere Bindemittel in Substanz, das heißt nicht in einem niedrigsiedendem, flüchtigen organischen Lösemittel gelöst eingesetzt wird oder dass niedrigsiedende, flüchtige organische Lösemittel nur in geringen Mengen von z.B. insgesamt maximal 5 Gew.% oder maximal 1 Gew.% und besonders bevorzugt maximal 0,1 Gew.% enthalten sind. Niedrigsiedende organische Lösemittel sind organische Lösungsmittel mit einem Siedepunkt bei Normaldruck (1013 mbar) von kleiner 120 °C.

Polyacrylatbindemittel sind Bindemittel auf Basis von Polymeren, die überwiegend, d.h. zu mehr als 50 Gew.% aus (Meth)acrylsäureestern aufgebaut sind. Der Ausdruck (Meth)acryl... ist eine abkürzende Schreibweise für "Acryl- oder Methacryl-".

Bei den erfindungsgemäß einzusetzenden Polyacrylatbindemitteln handelt es sich um Polymere mit vergleichsweise niedrigen, begrenzten Molekulargewichten, welche zumindest bei leichter Erwärmung fluide sind und eine ausreichend niedrige Viskosität aufweisen, um gut auf die zu beschichtenden Substrate aufgetragen werden zu können. Eine Maß für die Molekulargewichte ist der K-Wert (Fikentscher-Konstante). Der auch als Eigenviskosität bezeichnete K-Wert ist ein über Viskositätsmessungen von Polymerlösungen einfach zu bestimmender Wert und ist unter standardisierten Messbedingungen alleine abhängig von der mittleren Molmasse der untersuchten Probe. Die K-Werte der Polyacrylatbindemittel liegen im Bereich von 10 bis 35, vorzugsweise 10 bis 25, gemessen als 1%ige Lösung in Tetrahydrofuran bei 21°C.

Die Glasübergangstemperatur (Tg) des Polyacrylatbindemittels beträgt vorzugsweise -60 bis +80 °C, besonders bevorzugt von -30 bis kleiner oder gleich +60 °C. Die Glasübergangstemperatur lässt sich nach üblichen Methoden wie Differential Scanning Calorimetrie (ASTM 3418-08, sog. "midpoint temperature") bestimmen. Art und Menge der Monomeren sind derart, dass die Glasübergangstemperatur des Polyacrylatbindemittels in dem genannten Bereich liegt.

Die Nullviskosität das Polyacrylatbindemittels beträgt bei 130°C vorzugsweise maximal 40 Pa s, oder maximal 20 Pa s, oder maximal 10 Pa s, z.B. 1 bis 40 Pa s oder 1 bis 20 Pa s oder 1 bis 10 Pa s.

Bevorzugte Polyacrylatbindemittel sind erhältlich durch Polymerisation von radikalisch polymerisierbaren Acrylatmonomeren, worunter auch Methacrylatmonomere verstanden werden, und optional weiteren, copolymerisierbaren Monomeren. Die Polymere sind gebildet vorzugsweise zu mindestens 60 Gew. %, ganz besonders bevorzugt zu mindestens 80 Gew.-% aus $C_1$ bis $C_{10}$ Alkyl(meth)acrylaten und optional aus weiteren Monomeren. Als (Meth)acrylatmonomere genannt seien insbesondere C1-C8 Alkyl(meth)acrylate, z.B. Methyl(meth)acrylat, Ethyl(meth)-acrylat, n-Butyl(meth)acrylat und 2-Ethylhexyl (meth)acrylat.

Bevorzugt umfassen die Alkyl(meth)acrylate auch mehrfach ethylenisch ungesättigte, radikalisch polymerisierbare Monomere, insbesondere solche Monomere, die weitere acrylische oder nicht-acrylische, vernetzbare C-C-Doppelbindungen (kurz vernetzbare Gruppen) aufweisen. Vernetzbare Doppelbindungen sind insbesondere solche, die mit anderen Doppelbindungen radikalisch polymerisierbar sind (also durch radikalische Polymerisation vernetzen) oder solche, welche durch Abspaltung eines Wasserstoffatoms Radikale bilden (also durch Reaktionen dieser Radikale vernetzen). Als vernetzbare Gruppen in Betracht kommen z.B. die Allylgruppe oder cyclische Kohlenwasserstoffgruppen mit mindestens einer nicht-aromatischen C-C-Doppelbindung. Bei der cyclischen Kohlenwasserstoffgruppe handelt es sich insbesondere um eine Dihydrodicyclopentadienylgruppe der Formel:

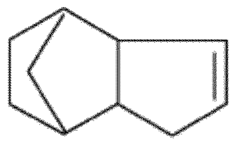

I

Genannt seien z.B. Allyl(meth)acrylat, Butandioldi(meth)acrylat oder Monomere mit einer (Meth)acrylgruppe und einer Dihydrodicyclopentadienylgruppe. Die (Meth)acrygruppe kann direkt oder indirekt, d.h. über eine organische Gruppe als Abstandshalter bzw. Spacer an die Dihydrodicyclopentadienylgruppe gebunden sein, bevorzugt ist Dihydrodicyclopentadienyl(meth)acrylat der Formeln:

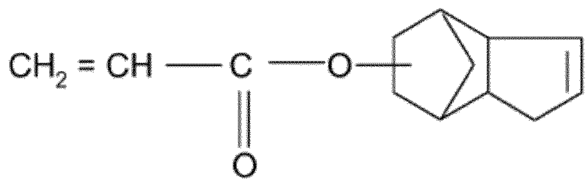

II

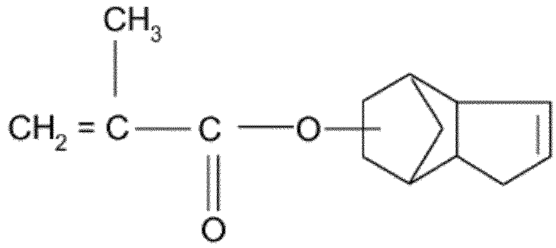

III

Monomere, die außer der ersten acrylischen Doppelbindung noch eine weitere ethylenische Doppelbindung, bevorzugt eine nicht-acrylische, tragen, können die Verbindung zwischen dem

Polyacrylatbindemittel und der radikalisch polymerisierbare Verbindung während der Aushärtung (Trocknung) und damit die Dämpfungseffizienz der Dämpfungsmasse verbessern.

Weitere, von Acrylaten verschiedene Monomere, aus denen das Polyacrylatbindemittel zusätzlich aufgebaut sein kann, sind z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren. Als vinylaromatische Verbindungen kommen z.B. Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt sind Vinylether von 1 bis 4 C-Atome enthaltenden Alkoholen. Als Kohlenwasserstoffe mit 2 bis 8 C-Atomen und zwei

olefinischen Doppelbindungen seien Butadien, Isopren und Chloropren genannt.

Als weitere Monomere in Betracht kommen insbesondere auch ethylenisch ungesättigte, radikalisch polymerisierbare Säuremonomere, beispielsweise Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch (Meth)acrylamid und Hydroxylgruppen enthaltende Monomere, insbesondere C1-C10-Hydroxyalkyl(meth)acrylate. Darüber hinaus seien Phenyloxyethylglykolmono(meth)-acrylat, Glycidylacrylat, Glycidylmethacrylat, Amino-(meth)acrylate wie 2-Aminoethyl(meth)-acrylat genannt. Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Die weiteren Monomere sind vorzugsweise ausgewählt aus ethylenisch ungesättigten, radikalisch polymerisierbaren Säuremonomeren, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Die Polyacrylatbindemittel können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Polyacrylatbindemittel durch Polymerisation der Monomeren in organischen Lösungsmitteln, insbesondere in organischen Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt.

Die Copolymerisate können bei Temperaturen von 20 bis 150 °C, vorzugsweise bei Temperaturen im Bereich von 70 bis 120 °C und Drucken von 0,1 bis 100 bar (absolut), bevorzugt bei 0,3 bis 10 bar, in Gegenwart von 0,01 bis 10 Gew.-% an Peroxiden oder Azostartern als Polymerisationsinitiatoren, bezogen auf die Monomeren und in Gegenwart von 0 bis 200 Gew.-% an indifferenten Lösungsmitteln, bevorzugt 5 bis 25 Gew.-%, bezogen auf die Monomeren, d.h. durch Lösungs- oder Substanzpolymerisation hergestellt werden. Vorzugsweise erfolgt die Reaktion unter zunehmendem Vakuum, z.B. durch Absenkung des Drucks von Normaldruck (1 bar) auf 500 mbar (absolut). Lösungsmittel sind beispielsweise Kohlenwasserstoffe wie Toluol oder o-Xylol, Alkohole wie Methanol, Ethanol, Propanol, Butanol, Isobutanol, Ketone wie Aceton, Methylethylketon, Methylisobutylketon, Essigsäureethylester, Nitrile wie Acetonitril und Benzonitril oder Gemische aus den genannten Lösemitteln.

Als Polymerisationsinitiatoren kommen beispielsweise Azoverbindungen, Ketonperoxide und Alkylperoxide in Betracht, z.B. Acylperoxide wie Benzoylperoxid, Dilauroylperoxid, Didecanoylperoxid, Isononanoylperoxid, Alkylester wie tert.-Butyl-tert.-perpivalat, tert.-Butyl-per-2-ethylhexa-noat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butyl-peroxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-dimethyl-valeronitril) Verwendung finden.

Für die Durchführung der Polymerisation können dem Reaktionsgemisch auch den Polymerisationsgrad senkende Verbindungen, sogenannte Polymerisationsregler zugesetzt werden, z.B. in Mengen von 0,1 bis 0,8 Gew.-Teile, bezogen auf 100 Gew.-Teile der zu polymerisierenden Monomeren. Geeignet sind z.B. Verbindungen mit einer Thiolgruppe beispielsweise Mercaptane wie Mercaptoethanol, tert.-Butylmercaptan, Mercaptobernsteinsäure, Thioglycolsäureethylhexylester, 3-Mercaptopropyltrimethoxysilan oder Dodecylmercaptan. In einer Ausführungsform werden keine Molekulargewichtsregler eingesetzt.

Das Polyacrylatbindemittel ist vorzugsweise hergestellt

(a1) zu mindestens 80 Gew.% aus C1- bis C10-Alkyl(meth)acrylaten und

(a2) zu 0,5 bis 20 Gew.% aus Monomeren mit polaren Gruppen, wobei die polaren Gruppen ausgewählt sind aus Carbonsäuregruppen, Carbonsäureamidgruppen, Pyrrolidongruppen, Urethangruppen, Harnstoffgruppen, Anhydridgruppen, Sulfatgruppen, Sulfonatgruppen, Phosphatgruppen und Phosphonatgruppen.

Ein besonders bevorzugtes Polyacrylatbindemittel ist hergestellt aus Methyl(meth)acrylat (vorzugsweise Methylmethacrylat), mindestens einem C2- bis C4-Alkylacrylat (vorzugsweise n-Butylacrylat), (Meth)acrylsäure (vorzugsweise Acrylsäure) und (Meth) acrylester mit zusätzlicher, nicht-acrylischer Doppelbindung (vorzugsweise Dihydrodicyclopentadienylacrylat), z.B.

(i) 0 bis 99 Gew.%, vorzugsweise 10 bis 50 Gew.% Methyl(meth)acrylat (vorzugsweise Methylmethacrylat),

(ii) 0 bis 99 Gew.%, vorzugsweise 30 bis 75 Gew.% mindestens eines C2- bis C10-Alkylacrylats (vorzugsweise n-Butylacrylat) und

(iii) 0,5 bis 15 Gew.%, vorzugsweise 1 bis 10 Gew.% (Meth)acrylsäure (vorzugsweise Acrylsäure)

(iv) 0 bis 25 Gew.%, vorzugsweise 0 ,1 bis 10 Gew% eines mehrfach ethylenisch ungesättigten Alkylacrylates (vorzugsweise Allylmethacrylat oder Dihydrocyclopentadienylacrylat) und
(v) 0 bis 30 Gew.% Styrol.

Im Unterschied zu bekannten Acrylat-Plastisolen, ist es nicht erforderlich, dass die Acrylatbindemittel Polymerpartikel mit einer Kern-Schale -Morphologie sind, sie weisen deshalb vorzugsweise keine Kern-Schale Morphologie auf.

Die erfindungsgemäße Antidröhnmasse enthält mindestens eine radikalisch polymerisierbare Verbindung (c), welche mindestens eine radikalisch polymerisierbare C-C-Doppelbindung aufweist und einen Siedepunkt bei Normaldruck von größer 160°C, vorzugsweise größer 180°C besitzt. Die Verbindung (c) wirkt dabei im Sinne eines sogenannten Reaktivverdünners. Ein Reaktivverdünner ist ein reaktives Verdünnungsmittel bzw. ein reaktives Lösemittel, das während der Filmbildung oder Trocknung durch chemische Reaktion Bestandteil der Beschichtung werden kann. Es kann sich um Monomere oder um Oligomere handeln mit jeweils einer, zwei, drei oder mehr Funktionalitäten (C-C-Doppelbindungen), z.B. Mono-, Di- oder Tri(meth)acrylate, wobei Oligomere Verbindungen sind, die vorzugsweise aus 2 bis 10 Monomereinheiten aufgebaut sind.

In einer Ausführungsform weisen die Verbindungen (c) zu 50 bis 100 Gew.% genau eine radikalisch polymerisierbare C-C-Doppelbindung auf und zu 0 bis 50 Gew.% weisen sie zwei oder mehr radikalisch polymerisierbare C-C-Doppelbindungen auf.

Geeignete Verbindungen (c) sind z.B. ausgewählt aus (Meth)acrylatmonomeren, Vinylethermonomeren, (Meth)acrylatoligomeren, Vinyletheroligomeren, Mono-, Di- oder Polyalkylenglykoldiacrylaten mit vorzugweise 1 bis 6, insbesondere 2 oder 3 C-Atomen in der Alkylengruppe, Urethanacrylaten oder deren Gemisch.

Die radikalisch polymerisierbaren Verbindungen (c) weisen im polymerisierten Zustand vorzugsweise eine Glasübergangstemperatur im Bereich von -30 bis +60°C auf.

Zur Unterstützung oder Induzierung der Polymerisation der polymerisierbaren Verbindungen (c) nach Auftragung der Antidröhnmasse enthält die Antidröhnmasse vorzugsweise zusätzlich mindestens einen thermisch aktivierbaren Initiator. Der Initiator initiiert bei Temperaturerhöhung eine radikalische Polymerisationsreaktion.

Geeignete thermische Initiatoren sind dieselben, die in der radikalischen Polymerisation Anwendung finden wie z.B. Azoverbindungen, Ketonperoxide und Alkylperoxide, z.B. Acylperoxide wie Benzoylperoxid, Dilauroylperoxid, Didecanoylperoxid, Isononanoylperoxid, Alkylester wie tert.-Butyl-tert.-perpivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, 1,1-Di(tert-butylperoxy)-3,3,5-trimethylcyclohexan, Di-tert.-Butyl-peroxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-di-methylvaleronitril) Verwendung finden.

Bevorzugte Initiatoren sind solche, die eine Halbwertszeit von größer oder gleich einer Stunde bei 100°C aufweisen. Ganz bevorzugt sind Initiatoren, die auf einem anorganischen Träger bereitgestellt werden, z.B. 1,1-Di(tert-butylperoxy)-3,3,5-trimethylcyclohexan, Pulver, 40% auf Calciumcarbonat und Silica.

Bevorzugte Mengen an thermischem Initiator sind 0,01 bis 10 Gew.%, bezogen auf die Antidröhnmasse, besonders bevorzugt von 0,1 bis 5 Gew.%.

Die Antidröhnmasse kann zur Optimierung der rheologischen und anwendungstechnischen Eigenschaften mindestens ein nicht-reaktives, inertes, bei Raumtemperatur (20 °C) flüssiges organisches Filmbildehilfsmittel mit Siedepunkt von größer 160 °C enthalten. Geeignete Filmbildehilfsmittel sind z.B. Ethylenglykol, Polyethylenglykole, Ethylenglykolalkylether (z.B. Cellosol-ve®-Typen), Diethylenglykolalkylether (z.B. Carbitol®-Typen), Carbitolacetat, Butylcarbitolacetat, Kohlenwasserstoffe oder deren Mischungen; Polypropylenglykolester, Polypropylenglykolether; Weichmacher wie Ester der Cyclohexandicarbonsäure und Phthalsäureester. Bevorzugte Filmbildehilfsmittel mit hohem Siedepunkt weisen bei Raumtemperatur (20 °C) eine geringe Viskosität auf, bevorzugt kleiner als 50 mPa s. Bevorzugte Filmbildehilfsmittel sind Polyethylenglykol, Oligopropylenglykolester oder Oligopropylenglykolether mit einem Siedepunkt von größer 160 °C ist, wobei "oligo" für 2 bis 10 Monomereinheiten steht.

Die Filmbildehilfsmittel mit einem Siedepunkt bei Normaldruck von größer 160 °C sind vorzugsweise in einer Menge von kleiner als 20 Gew% enthalten, z.B. von 0 bis kleiner 20 Gew.% oder von 1 bis kleiner 10 Gew.%, bevorzugt maximal zu 5 Gew.% oder maximal zu 1 Gew.% und besonders bevorzugt maximal zu 0,1 Gew.%.

Lösungsmittel mit einem Siedepunkt bei Normaldruck von kleiner 120 °C sind vorzugsweise in einer Menge von kleiner als 10 Gew% oder kleiner 5 Gew.% enthalten, z.B. von 0 bis kleiner 10 Gew.% oder von 0 bis kleiner 5 Gew.% oder von 1 bis kleiner 10 Gew.%. oder von 1 bis kleiner 5 Gew.%.

Geeignete Lösungsmittel mit Siedepunkt von kleiner 120 °C sind z.B. Aceton, Methylethylketon, niedere Alkohole mit vorzugsweise 1 bis 4 C-Atomen wie Methanol, Ethanol, n-Propanol und Isopropanol.

Die erfindungsgemäße Antidröhnmasse ist vorzugsweise lösemittelfrei, d.h. enthält kein oder jedenfalls weniger als 1 Gew.% oder weniger als 0,1 Gew.% organische Lösungsmittel mit Siedepunkt kleiner 120 °C °C.

Die erfindungsgemäße Antidröhnmasse enthält vorzugsweise

(a) 5 bis 35 Gew.%, vorzugsweise 10 bis 20 Gew.% des Polyacrylatbindemittels,
(b) 40 bis 90 Gew.% vorzugsweise 60 bis 80 Gew.% anorganische Füllstoffe und
(c) 1 bis 35 Gew.% der radikalisch polymerisierbaren Verbindung,
(d) 0,01 bis 10 Gew.% Initiator,
(e) von 0 bis 20 Gew% Filmbildehilfsmittel mit Siedepunkt größer 160 °C und
(f) 0 bis 50 Gew.%, vorzugsweise 0,1 bis 20 Gew.% Hilfsstoffe.

Falls Filmbildehilfsmittel verwendet werden, so werden vorzugsweise 0,3 bis 60 Gewichtsteile oder 3 bis 25 Gewichtsteile Filmbildehilfsmittel auf 100 Gewichtsteile Polyacrylatbindemittel eingesetzt.

Geeignete anorganische Füllstoffe sind z.B. Calciumcarbonat, Kaolin, Mica, Silica, Kreide, Mikrodolomit, Quarzmehl, Talk, Ton, Bariumsulfat, Tonerde, Eisenoxid, Titandioxid, Glaspulver, Glasschuppen, Magnesiumcarbonat, Aluminiumhydroxid, Bentonit, Flugasche, Kieselguhr, Perlit und Glimmer. Bevorzugt werden schuppenförmige Füllstoffe wie z.B. Mica eingesetzt, allein oder in Kombination mit gewöhnlichen anorganischen Pigmenten wie Calciumcarbonat, Kaolin, Silica oder Talk. Bevorzugte Füllstoffe sind Kaolin, Kreide, Bariumsulfat, Ruß, Graphit, Talkum, Tonmineralien, Mikrodolomit, Quarzmehl und Glimmer.

Vorzugsweise werden 50 bis 700 oder 100 bis 600 Gewichtsteile anorganischer Füllstoff auf 100 Gewichtsteile Polyacrylatbindemittel eingesetzt, wobei vorzugsweise 30 bis 150 oder 40 bis 120 Gewichtsteile schuppenförmige Füllstoffe auf 100 Gewichtsteile Polyacrylatbindemittel eingesetzt werden.

Hilfsstoffe, die vorzugsweise zu mindestens 0,1 Gew.%, z.B. von 0,2 bis 5 Gew.% eingesetzt werden sind z.B. Vernetzer, Verdickungsmitteln, Rheologieadditive, Harze, Weichmacher, organische und anorganische Pigmente, Stabilisatoren, Benetzungsmittel, Konservierungsstoffe, Schauminhibitoren, Glas- oder Kunststoffperlen, Glas- oder Kunststoffhohlkörper, Gefrierschutzmittel, Dispergiermittel, Antioxidantien, UV-Absorber, Antistatika und Pigmentdispergatoren. Von den Hilfsstoffen können ein, zwei oder mehrere in Kombination eingesetzt werden. Verdickungsmittel sind z.B. Polyvinylalkohole, Cellulosederivate oder Polyacrylsäuren in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid oder Zinksulfat.

Bevorzugt werden die Hilfsstoffe zu mindestens 0,1 Gew.% eingesetzt und sind ausgewählt aus Vernetzern, Verdickungsmitteln, Rheologieadditiven, Harzen, Weichmachern, Entschäumern, Konservierungsmitteln, Frostschutzmitteln und Pigmentdispergatoren.

Die Güte einer Antidröhnmasse kann durch Messung der Biegeschwingungen im Resonanzkurvenverfahren nach ISO 6721-1 und ISO 6721-3 gemessen werden. Ein Maß für die schwingungsdämpfende Wirkung ist der Verlustfaktor tan delta. Das Maximum des Verlustfaktors tan delta liegt bei erfindungsgemäßen Antidröhnmassen vorzugsweise im Bereich von -20 bis +70°C. Im Falle der Verwendung von zwei oder mehr verschiedenen Bindemitteln gibt es in der Regel zwei oder mehr Maxima des Verlustfaktors bei mindestens zwei verschiedenen Temperaturen. In diesem Fall liegen vorzugsweise alle Maxima des Verlustfaktors im Bereich von -20 bis +70 °C. Im Falle der Verwendung von Vernetzern beziehen sich die Werte auf die vernetzte Antidröhnmasse.

Gegenstand der Erfindung ist auch ein Verfahren zur Dämpfung von Vibrationen oder Schwingungen von Bauteilen von Fahrzeugen oder Maschinen, wobei

(1) eine oben näher beschriebene Antidröhnmasse zur Verfügung gestellt wird, und
(2) die Antidröhnmasse auf ein Bauteil eines Fahrzeuges oder einer Maschine aufgebracht und optional getrocknet und/oder vernetzt wird.

Das Aufbringen kann auf übliche Art erfolgen, z.B. durch Streichen, Rollen oder Sprühen. Die aufgebrachte Menge ist vorzugsweise von 1 bis 7 $kg/m^2$ oder von 2 bis 6 $kg/m^2$ nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.

Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.

Gegenstand der Erfindung ist auch ein mit einer oben beschriebenen Antidröhnmasse zumindest teilweise beschichtetes Substrat.

Die erfindungsgemäßen Antidröhnmassen haben gute anwendungstechnische Eigenschaften hinsichtlich guter Auftragbarkeit, einschließlich Sprühapplikationen und guten schwingungsdämpfenden Eigenschaften und zeichnen sich durch ein geringes Wasseraufnahmevermögen und eine Vermeidung von Blasenbildung auf.

Beispiele

Einsatzstoffe:

| | |
|---|---|
| Laromer® LR 8887 | monofunktioneller Reaktivverdünner, enthaltend Trimethylolpropanformalacrylat |
| Laromer® LR 8907 | Reaktivverdünner, Polyesteracrylat enthaltend Dipropylenglycoldiacrylat |
| Genomer® 1122 | Reaktivverdünner, enthaltend monofunktionelles Urethanacrylat |
| Trigonox® 17-40b-pd | Butyl-4,4-di(tert.-butylperoxy)valerat |
| Trigonox® 29-40B-pd | 1,1-Di(tert.-butylperoxy)-3,3,5-trimethylcyclohexan |

Beschreibung der Mischaggregate:

Speedmixer:

Es kommt ein SpeedMixer DAC 400FVZ der Firma Hausschild zum Einsatz. Dieser ist ein Rotationsmischer, wodurch die Proben ohne Einmischung von Luft durchmischt werden. Die Rotationsgeschwindigkeit ist in einem Bereich von 800 bis 2750 1/min einstellbar.

Dissolverrührer:

Die Apparatur besteht aus einem Rührwerk, einer damit angetriebenen Welle sowie einer D issolverscheibe als Rührwerkzeug. Bei dieser Form der Durchmischung wird Luft mit in die Probe eingearbeitet. Die Rührgeschwindigkeit kann im Bereich von 0- 1000 1/min eingestellt werden. Die Dissolverscheibe ist eine mit Zähnen an ihrem Umfang versehene Scheibe und dem Fachmann zur Dispergierung von z.B. Harzen in Wasser in der Farben- und Lackindustrie bekannt.

K-Wert:

Der K-Wert wird gemessen an einer 1 Gew.-%-igen Lösung in THF bei 21 °C. Dabei erfolgt die Viskositätsmessung mittels eines Kapillarviskosimeters. Der K-Wert berechnet sich nach der Fikentscher-Gleichung aus der relativen Viskosität $\eta_r$:
$\eta_r$= relative Viskosität (dynamische Viskosität der Lösung/dynamische Viskosität des Lösungsmittel) und c = Massenkonzentration an Polymer in der Lösung in g/cm$^3$.

$$K = 1000 \cdot k = 1000 \cdot \frac{1{,}5 \lg \eta_r - 1 \pm \sqrt{1 + (\frac{2}{c} + 2 + 1{,}5 \lg \eta_r) \cdot 1{,}5 \lg \eta_r}}{150 + 300c}$$

Durchführungsvorschriften finden sich in DIN EN ISO 1628-1:2012-10.

Beispiel 1: niedermolekulares Harz in o-Xylol polymerisiert

In einer Polymerisationsapparatur bestehend aus Glasreaktor, Rückflusskühler, Rührer und Stickstoffeinlass werden in leichtem Stickstoffstrom 484,1 g o-Xylol vorgelegt und auf 140 °C erwärmt. Es werden bei 120°C 40 g einer Monomerenmischung bestehend aus456 g n-Butylacrylat, 160 g Methylmethacrylat, 64 g Acrylsäure und 120 g Dihydrodicyclopentadienylacrylat, zugegeben. Bei 137°C werden 4,5 g einer Starterlösung aus 10,7g tert.-Butylperpivalat (75%ig in Mineralöl) und 80 g o-Xylol zugegeben und 3 min anpolymerisiert, Dann werden die restlichen 760 g Monomerenmischung und 86 g Starterlösung in 3 h zugefahren. 15 min nach Zulaufende wird eine Lösung von 2,56 g tert.-Butylperpivalat (75%ig in Mineralöl) in 40 g o-Xylol in 30 min zugegeben. Danach wird Vakuum angelegt und das Lösungsmittel bei maximal 140°C und <50 mbar abdestilliert. Anschließend wird noch unter langsamem Rühren 1h bei 140°C und bestem Vakuum entgast.
K-Wert; 1% in THF: 16,7
Nullviskosität bei 60°C: 1670 Pa*s

Beispiel 2: mittelmolekulares Harz in Methylethylketon (MEK) polymerisiert

In einer Polymerisationsapparatur bestehend aus Glasreaktor, Rückflusskühler, Rührer und Stickstoffeinlass werden in leichtem Stickstoffstrom 1104 g MEK vorgelegt und auf 80°C erwärmt. Es werden 25 g einer Monomerenmischung bestehend aus 300 g n-Butylacrylat, 160 g Methylmethacrylat, 25 g Acrylsäure und 15 g Dihydrodicyclopentadienyl-acrylat, zugegeben. Nach Wiedererreichen von 80°C werden 2,8 g einer Starterlösung aus 6,7 g tert.-Butylperpivalat (75%ig in Mineralöl) und 50 g MEK zugegeben und 3 min anpolymerisiert, Dann werden die restlichen 475 g Monomerenmischung und 53,8 g Starterlösung in 3 h. zugefahren. Anschließend wird die Temperatur auf 90°C erhöht und eine Lösung von 6 g tert.-Butyl-perpivalat (75%ig in Mineralöl) in 25g MEK in 30 min zugegeben. Danach wird Vakuum angelegt und das Lösungsmittel bei maximal 135°C und <50 mbar abdestilliert. Anschließend wird noch unter langsamem Rühren 1h bei 135°C und bestem Vakuum entgast.
K-Wert; 1% in THF: 27,5
Nullviskosität bei 90°C: 822 Pa*s

Beispiel 3: niedermolekulares Harz in o-Xylol polymerisiert

In einer Polymerisationsapparatur bestehend aus Glasreaktor, Rückflusskühler, Rührer und Stickstoffeinlass werden in leichtem Stickstoffstrom 860 g o-Xylol vorgelegt und auf 140°C erwärmt. Es werden bei 120°C 50 g einer Monomerenmischung bestehend aus 600 g n-Butylacrylat, 330 g Methylmethacrylat, 50 g Acrylsäure und 20 g Dihydrodicyclopentadienyl-acrylat, zugegeben. Bei 137°C werden 5,7g einer Starterlösung aus 13,3 g tert.-Butylperpivalat (75%ig in Mineralöl) und 100 g o-Xylol zugegeben und 3 min anpolymerisiert, Dann werden die restlichen 950 g Monomerenmischung und 107,7 g Starterlösung in 3 h zugefahren. 15 min nach Zulaufende wird eine Lösung von 3,2 g tert.-Butyl-perpivalat (75%ig in Mineralöl) in 50 g o-Xylol in 30 min zugegeben. Danach wird Vakuum angelegt und das Lösungsmittel bei maximal 140° C und <50 mbar abdestilliert. Anschließend wird noch unter langsamem Rühren 1h bei 140°C und bestem Vakuum entgast.
K-Wert; 1% in THF: 16,8
Nullviskosität bei 60°C: 449 Pa*s
Nullviskosität bei 90°C: 39 Pa*s

Beispiel 4: niedermolekulares Harz in o-Xylol polymerisiert

In einer Polymerisationsapparatur bestehend aus Glasreaktor, Rückflusskühler, Rührer und Stickstoffeinlass werden in leichtem Stickstoffstrom 602 g o-Xylol vorgelegt und auf 140°C erwärmt. Es werden bei 120°C 35 g einer Monomerenmischung bestehend aus 399 g n-Butylacrylat , 119 g Methylmethacrylat, 105 g Styrol, 56 g Acrylsäure und 21 g Dihydrodicyclopentadienylacrylat zugegeben. Bei 137°C werden 3,97 g einer Starterlösung aus 9,33 g tert.-Butylperpivalat (75%ig in Mineralöl) und 70 g o-Xylol zugegeben und 3 min anpolymerisiert, Dann werden die restlichen 665 g Monomerenmischung und 75 g Starterlösung in 3 h zugefahren. 15 min nach Zulaufende wird eine Lösung von 2,24 g tert.-Butyl-perpivalat (75%ig in Mineralöl) in 35 g o-Xylol in 30 min zugegeben. Danach wird Vakuum angelegt und das Lösungsmittel bei maximal 140° C und <50 mbar abdestilliert. Anschließend wird noch unter langsamem Rühren 1h bei 140°C und bestem Vakuum entgast.
K-Wert; 1% in THF: 19,7
Nullviskosität bei 90°C: 261 Pa*s

Beispiel 5: niedermolekulares Harz in o-Xylol polymerisiert

In einer Polymerisationsapparatur bestehend aus Glasreaktor, Rückflusskühler, Rührer und Stickstoffeinlass werden in leichtem Stickstoffstrom 860 g o-Xylol vorgelegt und auf 140°C erwärmt. Es werden bei 120°C 50 g einer Monomerenmischung bestehend aus 600 g n-Butylacrylat, 350 g Methylmethacrylat und 50 g Acrylsäure, zugegeben. Bei 137°C werden 5,7g einer Starterlösung aus 13,3 g tert.-Butylperpivalat (75%ig in Mineralöl) und 100 g o-Xylol zugegeben und 3 min anpolymerisiert. Dann werden die restlichen 950 g Monomerenmischung und 107,7 g Starterlösung in 3 h zugefahren. 15 min nach Zulaufende wird eine Lösung von 3,2 g tert.-Butyl-perpivalat (75%ig in Mineralöl) in 50 g o-Xylol in 30 min zugegeben. Danach wird Vakuum angelegt und das Lösungsmittel bei maximal 140° C und <50 mbar abdestilliert. Anschließend wird noch unter langsamem Rühren 1h bei 140°C und bestem Vakuum entgast.
K-Wert; 1% in THF: 16,2
Nullviskosität bei 60°C: 415 Pa*s
Nullviskosität bei 90°C: 32 Pa*s

Beispiel 6: Herstellung einer Mischung aus niedermolekularem Harz aus Beispiel 1 und Reaktivverdünnern (Laromer® LR 8887 und Laromer® LR 8907)

Das Harz aus Beispiel 1 wird bei 80°C mit den Laromeren® LR 8887 und LR 8907 im Verhältnis 50:40:10 (Harz:LR8887:LR8907) im Dissolverrührer vermischt. Anschließend wird die Mischung im Speedmixer für 1 min bei 2750 U/min homogenisiert.
Nullviskosität bei 23°C: 19 Pa*s

Beispiel 7: Herstellung einer Mischung aus niedermolekularem Harz aus Beispiel 2 und Reaktivverdünner (Laromer® LR 8887)

Das Harz aus Beispiel 2 wird bei 80°C mit Laromer® LR 8887 im Verhältnis 50:50 (Harz:LR8887) im Dissolverrührer vermischt. Anschließend wird die Mischung im Speedmixer für 1 min bei 2750 U/min homogenisiert.
Nullviskosität bei 23°C: 65 Pa*s

Beispiel 8: Herstellung einer Mischung aus niedermolekularem Harz aus Beispiel 3 und Reaktivverdünner (Laromer® LR 8887)

Das Harz aus Beispiel 3 wird bei 80°C mit Laromer® LR 8887 im Verhältnis 50:50 (Harz:LR8887) im Dissolverrührer vermischt. Anschließend wird die Mischung im Speedmixer für 1 min bei 2750 U/min homogenisiert.
Nullviskosität bei 23°C: 6 Pa*s

Beispiel 9: Herstellung einer Mischung aus niedermolekularem Harz aus Beispiel 3 und Reaktivverdünner (Genomer® 1122)

Das Harz aus Beispiel 3 wird bei 80°C mit Genomer® 1122 im Verhältnis 50:50 (Harz: 1122) im Dissolverrührer vermischt. Anschließend wird die Mischung im Speedmixer für 1 min bei 2750 U/min homogenisiert.
Nullviskosität bei 23°C: 8 Pa*s

Beispiel 10: Herstellung einer Mischung aus niedermolekularem Harz aus Beispiel 4 und Reaktivverdünner (Laromer® LR 8887)

Das Harz aus Beispiel 4 wird bei 80°C mit Laromer® LR 8887 im Verhältnis 50:50 (Harz:LR8887) im Dissolverrührer vermischt. Anschließend wird die Mischung im Speedmixer für 1 min bei 2750 U/min homogenisiert.
Nullviskosität bei 23°C: 11 Pa*s

Beispiel 11: Herstellung einer Mischung aus niedermolekularem Harz aus Beispiel 5 und Reaktivverdünner (Heptadecylacrylat)

Das Harz aus Beispiel 5 wird bei 80°C mit Heptadecylacrylat im Verhältnis 50:50 (Harz:Acrylat) im Dissolverrührer vermischt. Anschließend wird die Mischung im Speedmixer für 1 min bei 2750 U/min homogenisiert.
Nullviskosität bei 23°C: 9 Pa*s

Herstellung der Antidröhnmasse A6:

Zu der Mischung aus dem Beispiel 6 wird bei 60°C 1% (bezogen auf die Mischung) Initiator (Trigonox® 17-40b-pd) gegeben und 1 min im Speedmixer bei 2750 U/min vermischt. Anschließend werden Bariumsulfat (EWO) und Kreide (Omyacarb® 15GU) (zu gleichen Gewichtsanteilen) zu dem Bindemittel (Mischung 6) im Verhältnis 80:20 (Füllstoff:Bindemittel) gegeben und im Speedmixer für 1 min bei 2750 U/min homogenisiert.

Herstellung der Antidröhnmassen A7 bis A11:

Zu den Mischungen aus den Beispielen 7 bis 11 wird bei 60°C 1% (bezogen auf die Mischung) Initiator (Trigonox® 29-40B-PD) gegeben und 1 min im Speedmixer bei 2750 U/min vermischt. Anschließend werden Bariumsulfat (EWO) und Kreide (Omyacarb® 20BG) zu gleichen Gewichtsanteilen zu dem Bindemittel (Mischungen aus den Beispielen 7 bis 11) im Verhältnis 80:20 (Füllstoff:Bindemittel) gegeben und im Speedmixer für 1 min bei 2750 U/min homogenisiert.

Anwendungstechnische Prüfungen

Bestimmung des Schwingungsdämpfung (Verlustfaktor / tan delta)

Zur Beurteilung des Schwingungsdämpfungsverhaltens wird der Verlustfaktor tan delta bei 25°C gemessen wie in WO 2007/034933 beschrieben (analog ISO 6721-1 und ISO 6721-3). Hierzu wird ein Prüfkörper aus Stahlblech einer Größe von 30 x 300 x 1,6 mm mit der zu testenden Antidröhnmasse beschichtet und 30 min bei 160°C getrocknet.
Die Beschichtungsmenge beträgt ca. 3,0 kg pro $m^2$.

Bestimmung der Wasseraufnahme:

Die Bestimmung der Wasseraufnahme wird in Anlehnung an die DIN EN ISO 62:2008 durchgeführt. Dazu werden von den erstellten Antidröhnmassen Filme einer Stärke von ca. 2 mm und einer Seitenlänge von je 25 mm hergestellt. Dazu werden die Filme erst 24 h bei Raumtemperatur (20°C), danach 30 min bei 160°C getrocknet und jeweils 24 h bzw. 7 Tage in demineralisierten Wasser gelagert. Bestimmt wird die relative Massezunahme bei Lagerung. Diese wird gravimetrisch mittels einer Analysenwaage vom Typ AG204 der Firma Mettler Toledo ermittelt.

Blasenbildung:

Die Antidröhnmasse der Stärke 3 mm und der Kantenlänge 60 mm x 100 mm wird nach 30 min Trocknung bei 160°C optisch beurteilt. Dabei findet folgende Notenskala Verwendung:
1: keine Blasen, 2: 2-3 kleine Blasen, 3: leichte Anhebung der Masse, 4: große Blase, komplette Masse wölbt sich.

Bestimmung der Nullviskosität:

Die Nullviskosität ist der Grenzwert der Viskositätsfunktion bei unendlich niedrigen Scherraten. Sie wird gemessen mit einem Anton Paar Rheometer MCR 100 (US 200 Auswertesoftware) in Platte/Platte Geometrie. Die Proben werden in oszillatorischer Scherung bei kleiner Scheramplitude von 10% vermessen. Temperatur 20°, 60° oder 90°C (wie angegeben), Kreisfrequenzrampe log 100-0,1 1/s, Messspalt 0,5 mm, Auswertung nach Carreau-Gahleitner I, Stempeldurchmesser 25 mm.
Die Ergebnisse sind in Tabellen 1 bis 3 zusammengefasst.

Tabelle 1: Ergebnisse der anwendungstechnischen Prüfungen

| | Antidröhnmasse: | A6 | A7 | A8 | A9 | A10 | A11 |
|---|---|---|---|---|---|---|---|
| Schwingungsdämpfung | tan delta max | 0,12 | 0,13 | 0,12 | 0,19 | 0,13 | 0,09 |
| | Halbwertsbreite [°C] | 40 | 45 | 40 | 30 | 40 | 30 |
| | T max [°C] | 30 | 25 | 20 | 17 | 30 | 15 |
| Wasseraufnahme | [nach 24h/7d in %] | n. bes. | 1/2 | 1/2 | 1/2 | 0/1 | 1/2 |
| Blasenbildung | (opt. Beurteilung) | 1 | 2 | 1 | 1 | 1 | 1 |

Tabelle 2: Nullviskositäten der Harze aus den Beispielen 1 bis 5 (B1 bis B5

| | | B1 | B2 | B3 | B4 | B5 |
|---|---|---|---|---|---|---|
| Nullviskosität der Harze B1 bis B5 | [bei 60°C in Pa*s]<br>[bei 90°C in Pa*s] | 1670<br>n.b. | n.b.<br>822 | 449<br>39 | n.b.<br>261 | 415<br>32 |
| n.b.: nicht bestimmt | | | | | | |

Tabelle 3: Nullviskositäten der Bindemittelzusammensetzungen aus den Beispielen 6 bis 11 (B6 bis B11)

| | | B6 | B7 | B8 | B9 | B10 | B11 |
|---|---|---|---|---|---|---|---|
| Nullviskosität der Bindemittel B6 bis B11 | [bei 23°C in Pa*s] | 19 | 65 | 6 | 8 | 11 | 9 |

Die Ergebnisse zeigen, dass die reinen Harze (Acrylatbindemittel der Beispiel 1 bis 5) auf Grund ihrer hohen Nullviskositäten als alleiniges Bindemittel zur Herstellung einer bei Raumtemperatur spritzbaren Antidröhnmasse ungeeignet sind. Erst die Herstellung erfindungsgemäßer Bindemittelzusammensetzungen aus einer Mischung aus Harz und radikalisch polymerisierbare Verbindung lässt hinreichend niedrige Nullviskositäten bei Raumtemperatur (Beispiele 6 bis 11) zu, mittels derer sich bei Raumtemperatur spritzbare Antidröhnmassen (A6 bis A11) realisieren lassen.

Für die guten Dämpfungseigenschaften (Summe aus Höhe des Maximums und Halbwertsbreite) ist eine Kombination der erfindungsgemäß einzusetzenden Harze mit der erfindungsgemäßen Auswahl an radikalisch polymerisierbaren Verbindungen entscheidend.

## Patentansprüche

1. Nicht-wässrige Antidröhnmasse, enthaltend

   (a) mindestens ein nicht-pulverförmiges-Polyacrylatbindemittel mit einem K-Wert im Bereich von 10 bis 35, gemessen als 1%ige Lösung in Tetrahydrofuran bei 21°C; und
   (b) anorganische Füllstoffe und
   (c) mindestens eine radikalisch polymerisierbare Verbindung, welche mindestens eine radikalisch polymerisierbare C-C-Doppelbindung aufweist und einen Siedepunkt bei Normaldruck von größer 160°C, vorzugsweise größer 180 °C besitzt.

2. Antidröhnmasse gemäß dem vorhergehenden Anspruch, **dadurch gekennzeichnet, dass** die Verbindungen (c) zu 50 bis 100 Gew.% genau eine radikalisch polymerisierbare C-C-Doppelbindung aufweisen und zu 0 bis 50 Gew.% zwei oder mehr radikalisch polymerisierbare C-C-Doppelbindungen aufweisen.

3. Antidröhnmasse gemäß einem der vorhergehenden Ansprüche, **dadurch gekennzeichnet, dass** die Verbindungen (c) ausgewählt sind aus (Meth)acrylatmonomeren, Vinylethermonomeren, (Meth)acrylatoligomeren, Vinyletheroligomeren, Mono-, Di- oder Polyalkylenglykoldiacrylaten, Urethanacrylaten oder deren Gemisch.

4. Antidröhnmasse gemäß einem der vorhergehenden Ansprüche, **dadurch gekennzeichnet, dass** die Verbindungen (c) im polymerisierten Zustand eine Glasübergangstemperatur im Bereich von -30 bis +60°C aufweisen.

5. Antidröhnmasse gemäß einem der vorhergehenden Ansprüche, **dadurch gekennzeichnet, dass** zusätzlich mindestens ein thermisch aktivierbarer Initiator enthalten ist.

6. Antidröhnmasse gemäß einem der vorhergehenden Ansprüche, **dadurch gekennzeichnet, dass** zusätzlich mindestens ein Filmbildehilfsmittel mit einem Siedepunkt bei Normaldruck von größer 160 °C in einer Menge von vorzugsweise kleiner als 10 Gew% enthalten ist.

7. Antidröhnmasse gemäß dem vorhergehenden Anspruch, **dadurch gekennzeichnet, dass** das Filmbildehilfsmittel ein Polyethylenglykol, ein Oligopropylenglykolester oder ein Oligopropylenglykolether mit einem Siedepunkt von größer 160 °C ist.

8. Antidröhnmasse gemäß einem der vorhergehenden Ansprüche, **dadurch gekennzeichnet, dass** zusätzlich mindestens ein organisches Lösungsmittel mit einem Siedepunkt bei Normaldruck kleiner 120 °C in einer Menge von vorzugsweise kleiner 10 Gew% enthalten ist.

9. Antidröhnmasse gemäß einem der vorhergehenden Ansprüche, **dadurch gekennzeichnet, dass** das Polyacrylatbindemittel durch Polymerisation von radikalisch polymerisierbaren Monomeren erhältlich ist und zu mindestens 60 Gew. % aus $C_1$ bis $C_{10}$ Alkyl(meth)-acrylaten gebildet ist und optional aus weiteren Monomeren gebildet ist, ausgewählt aus ethylenisch ungesättigten, radikalisch polymerisierbaren Säuremonomeren, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

10. Antidröhnmasse gemäß einem der vorhergehenden Ansprüche, **dadurch gekennzeichnet, dass** das Polyacrylatbindemittel eine Glasübergangstemperatur im Bereich von -60 bis +80 °C, vorzugsweise im Bereich von -30 °C bis kleiner oder gleich +60 °C aufweist.

11. Antidröhnmasse gemäß einem der vorhergehenden Ansprüche, **dadurch gekennzeichnet, dass** das Polyacrylatbindemittel keine Kern-Schale Morphologie aufweist.

12. Antidröhnmasse gemäß einem der vorhergehenden Ansprüche, **dadurch gekennzeichnet, dass** das Polyacrylatbindemittel bei 130°C eine Nullviskosität von maximal 40 Pa s, vorzugsweise maximal 20 Pa s aufweist.

13. Antidröhnmasse gemäß einem der vorhergehenden Ansprüche, **dadurch gekennzeichnet, dass** das Polyacrylatbindemittel hergestellt ist

(a1) zu mindestens 80 Gew.% aus C1- bis C10-Alkyl(meth)acrylaten und
(a2) zu 0,5 bis 20 Gew.% aus Monomeren mit polaren Gruppen, wobei die polaren Gruppen ausgewählt sind aus Carbonsäuregruppen, Carbonsäureamidgruppen, Pyrrolidongruppen, Urethangruppen, Harnstoffgruppen, Anhydridgruppen, Sulfatgruppen, Sulfonatgruppen, Phosphatgruppen und Phosphonatgruppen.

14. Antidröhnmasse gemäß einem der vorhergehenden Ansprüche, **dadurch gekennzeichnet, dass** das Polyacrylatbindemittel hergestellt ist aus Methyl(meth)acrylat, mindestens einem C2- bis C4-Alkylacrylat und (Meth)acrylsäure sowie optionalmindesens einem weiteren Mopnomer ausgewählt aus Allylmethacrylat, Dihydrocyclopentadienylacrylat und Styrol.

15. Antidröhnmasse gemäß einem der vorhergehenden Ansprüche, **dadurch gekennzeichnet, dass** das Polyacrylatbindemittel hergestellt ist aus

(i) 0 bis 99 Gew.% Methyl(meth)acrylat,
(ii) 0 bis 99 Gew.% mindestens eines C2- bis C10-Alkylacrylats,
(iii)0,5 bis 15 Gew.% (Meth)acrylsäure,
(iv)0 bis 25 Gew.%, vorzugsweise 0 ,1 bis 10 Gew% eines mehrfach ethylenisch ungesättigten Alkylacrylates, vorzugsweise Allylmethacrylat oder Dihydrocyclopentadienylacrylat und
(v) 0 bis 30 Gew.% Styrol.

16. Antidröhnmasse gemäß einem der vorhergehenden Ansprüche, enthaltend

(a) 5 bis 35 Gew.% des Polyacrylatbindemittels,
(b) 40 bis 90 Gew.% anorganische Füllstoffe,
(c) 1 bis 35 Gew.% der radikalisch polymerisierbaren Verbindung,
(d) 0,01 bis 10 Gew.% Initiator,
(e) von 0 bis 20 Gew.% Lösungsmittel mit Siedepunkt größer 160 °C und
(f) 0 bis 50 Gew.% weiterer Hilfsstoffe.

17. Antidröhnmasse gemäß einem der vorhergehenden Ansprüche, **dadurch gekennzeichnet, dass** die anorganischen Füllstoffe ausgewählt sind aus Kaolin, Kreide, Bariumsulfat, Ruß, Graphit, Talkum, Tonmineralien, Mikrodolomit, Quarzmehl und Glimmer und die Hilfsstoffe zu mindestens 0,1 Gew.% eingesetzt werden und ausgewählt sind aus Vernetzern, Verdickungsmitteln, Rheologieadditiven, Harzen, Weichmachern, Entschäumern, Konservierungsmitteln, Frostschutzmitteln und Pigmentdispergatoren.

18. Antidröhnmasse gemäß einem der vorhergehenden Ansprüche, **dadurch gekennzeichnet, dass** die Antidröhnmasse frei ist von organischen Lösemitteln mit einem Siedepunkt kleiner 120 °C bei Normaldruck.

19. Verwendung einer Antidröhnmasse gemäß einem der vorherigen Ansprüche zur Schwingungsdämpfung von Karosserieteilen eines Fahrzeugs.

20. Verfahren zur Dämpfung von Vibrationen oder Schwingungen von Bauteilen von Fahrzeugen oder Maschinen, wobei

(1) eine Antidröhnmasse gemäß einem der Ansprüche 1 bis 18 zur Verfügung gestellt wird, und
(2) die Antidröhnmasse auf ein Bauteil eines Fahrzeuges oder einer Maschine aufgebracht und optional getrocknet und/oder vernetzt wird.

21. Mit einer Antidröhnmasse gemäß einem der Ansprüche 1 bis 18 zumindest teilweise beschichtetes Substrat.

## Claims

1. A nonaqueous sound deadener composition comprising

(a)at least one nonpulverulent polyacrylate binder having a K value in the range from 10 to 35, measured as a 1% strength solution in tetrahydrofuran at 21°C; and
(b)inorganic fillers, and
(c)at least one radically polymerizable compound which has at least one radically polymerizable C-C double bond and possesses a boiling point at atmospheric pressure of greater than 160°C, preferably greater than 180°C.

2. The sound deadener composition according to the preceding claim, wherein the compounds (c) have precisely one radically polymerizable C-C double bond to an extent of 50% to 100% by weight, and have two or more radically polymerizable C-C double bonds to an extent of 0% to 50% by weight.

3. The sound deadener composition according to either of the preceding claims, wherein the compounds (c) are selected from (meth)acrylate monomers, vinyl ether monomers, (meth)acrylate oligomers, vinyl ether oligomers, mono-, di- or polyalkylene glycol diacrylates, urethane acrylates, or a mixture thereof.

4. The sound deadener composition according to any of the preceding claims, wherein the compounds (c) in the polymerized state have a glass transition temperature in the range from -30 to +60°C.

5. The sound deadener composition according to any of the preceding claims, further comprising at least one thermally activatable initiator.

6. The sound deadener composition according to any of the preceding claims, further comprising at least one film-forming assistant having a boiling point at atmospheric pressure of greater than 160°C in an amount of preferably less than 10% by weight.

7. The sound deadener composition according to the preceding claim, wherein the film-forming assistant is a polyethylene glycol, an oligopropylene glycol ester or an oligopropylene glycol ether having a boiling point of greater than 160°C.

8. The sound deadener composition according to any of the preceding claims, further comprising at least one organic solvent having a boiling point at atmospheric pressure of less than 120°C in an amount of preferably less than 10% by weight.

9. The sound deadener composition according to any of the preceding claims, wherein the polyacrylate binder is obtainable by polymerizing radically polymerizable monomers and is formed to an extent of at least 60% by weight of $C_1$ to $C_{10}$ alkyl (meth)acrylates and optionally of further monomers selected from ethylenically unsaturated, radically polymerizable acid monomers, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

10. The sound deadener composition according to any of the preceding claims, wherein the polyacrylate binder has a glass transition temperature in the range from -60 to +80°C, preferably in the range from -30°C to less than or equal to +60°C.

11. The sound deadener composition according to any of the preceding claims, wherein the polyacrylate binder does not have a core-shell morphology.

12. The sound deadener composition according to any of the preceding claims, wherein the polyacrylate binder at 130°C has a zero-shear viscosity of not more than 40 Pa s, preferably not more than 20 Pa s.

13. The sound deadener composition according to any of the preceding claims, wherein the polyacrylate binder is prepared

(a1) to an extent of at least 80% by weight from C1 to C10 alkyl (meth)acrylates and

(a2) to an extent of 0.5% to 20% by weight from monomers having polar groups, the polar groups being selected from carboxylic acid groups, carboxamide groups, pyrrolidone groups, urethane groups, urea groups, anhydride groups, sulfate groups, sulfonate groups, phosphate groups, and phosphonate groups.

**14.** The sound deadener composition according to any of the preceding claims, wherein the polyacrylate binder is prepared from methyl (meth)acrylate, at least one C2 to C4 alkyl acrylate, and (meth)acrylic acid, and also, optionally, from at least one further monomer selected from allyl methacrylate, dihydrocyclopentadienyl acrylate, and styrene.

**15.** The sound deadener composition according to any of the preceding claims, wherein the polyacrylate binder is prepared from

(i) 0% to 99% by weight of methyl (meth)acrylate,
(ii) 0% to 99% by weight of at least one C2 to C10 alkyl acrylate,
(iii) 0.5% to 15% by weight of (meth)acrylic acid,
(iv) 0% to 25% by weight, preferably 0.1% to 10% by weight, of a polyethylenically unsaturated alkyl acrylate, preferably allyl methacrylate or dihydrocyclopentadienyl acrylate, and
(v) 0% to 30% by weight of styrene.

**16.** The sound deadener composition according to any of the preceding claims, comprising

(a) 5% to 35% by weight of the polyacrylate binder,
(b) 40% to 90% by weight of inorganic fillers,
(c) 1% to 35% by weight of the radically polymerizable compound,
(d) 0.01% to 10% by weight of initiator,
(e) from 0% to 20% by weight of solvent with boiling point greater than 160°C, and
(f) 0% to 50% by weight of further auxiliaries.

**17.** The sound deadener composition according to any of the preceding claims, wherein the inorganic fillers are selected from kaolin, chalk, barium sulfate, carbon black, graphite, talc, clay minerals, microdolomite, finely ground quartz, and mica, and the auxiliaries are used to an extent of at least 0.1% by weight and are selected from crosslinkers, thickeners, rheological additives, resins, plasticizers, defoamers, preservatives, antifreeze agents, and pigment dispersants.

**18.** The sound deadener composition according to any of the preceding claims, wherein the sound deadener composition is free from organic solvents having a boiling point of less than 120°C at atmospheric pressure.

**19.** The use of a sound deadener composition according to any of the preceding claims for vibration damping of bodywork parts of a vehicle.

**20.** A method for damping oscillations or vibrations of components of vehicles or machines, by

(1) providing a sound deadener composition according to any of claims 1 to 18, and
(2) applying the sound deadener composition to a component of a vehicle or of a machine, and subjecting it optionally to drying and/or to crosslinking.

**21.** A substrate at least partly coated with a sound deadener composition according to any of claims 1 to 18.

## Revendications

**1.** Masse insonorisante non aqueuse, contenant :

(a) au moins un liant polyacrylate non pulvérulent ayant une valeur K dans la plage allant de 10 à 35, mesurée sous la forme d'une solution à 1 % dans du tétrahydrofurane à 21 °C ; et
(b) des charges inorganiques, et
(c) au moins un composé polymérisable par voie radicalaire, qui comprend au moins une double liaison C-C polymérisable par voie radicalaire, et qui présente un point d'ébullition à pression normale supérieur à 160 °C, de préférence supérieur à 180 °C.

2. Masse insonorisante selon la revendication précédente, **caractérisée en ce que** les composés (c) comprennent à hauteur de 50 à 100 % en poids exactement une double liaison C-C polymérisable par voie radicalaire et à hauteur de 0 à 50 % en poids deux doubles liaisons C-C polymérisables par voie radicalaire ou plus.

3. Masse insonorisante selon l'une quelconque des revendications précédentes, **caractérisée en ce que** les composés (c) sont choisis parmi les monomères de (méth)acrylate, les monomères d'éther de vinyle, les oligomères de (méth)acrylate, les oligomères d'éther de vinyle, les diacrylates de mono-, di- ou polyalkylène glycol, les acrylates d'uréthane ou leur mélange.

4. Masse insonorisante selon l'une quelconque des revendications précédentes, **caractérisée en ce que** les composés (c) présentent à l'état polymérisé une température de transition vitreuse dans la plage allant de -30 à +60 °C.

5. Masse insonorisante selon l'une quelconque des revendications précédentes, **caractérisée en ce qu'**au moins un initiateur activable thermiquement est en outre contenu.

6. Masse insonorisante selon l'une quelconque des revendications précédentes, **caractérisée en ce qu'**au moins un adjuvant filmogène ayant un point d'ébullition à pression normale supérieur à 160 °C est en outre contenu en une quantité de préférence inférieure à 10 % en poids.

7. Masse insonorisante selon la revendication précédente, **caractérisée en ce que** l'adjuvant filmogène est un polyéthylène glycol, un oligoester de propylène glycol ou un oligoéther de propylène glycol ayant un point d'ébullition supérieur à 160 °C.

8. Masse insonorisante selon l'une quelconque des revendications précédentes, **caractérisée en ce qu'**au moins un solvant organique ayant un point d'ébullition à pression normale inférieur à 120 °C est en outre contenu en une quantité de préférence inférieure à 10 % en poids.

9. Masse insonorisante selon l'une quelconque des revendications précédentes, **caractérisée en ce que** le liant polyacrylate peut être obtenu par polymérisation de monomères polymérisables par voie radicalaire et est formé par au moins 60 % en poids de (méth)acrylates d'alkyle en $C_1$ à $C_{10}$ et éventuellement d'autres monomères, choisis parmi les monomères acides éthyléniquement insaturés polymérisables par voie radicalaire, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons ou les mélanges de ces monomères.

10. Masse insonorisante selon l'une quelconque des revendications précédentes, **caractérisée en ce que** le liant polyacrylate présente une température de transition vitreuse dans la plage allant de -60 à +80 °C, de préférence dans la plage allant de -30 °C à une température inférieure ou égale à +60 °C.

11. Masse insonorisante selon l'une quelconque des revendications précédentes, **caractérisée en ce que** le liant polyacrylate ne présente pas une morphologie noyau-enveloppe.

12. Masse insonorisante selon l'une quelconque des revendications précédentes, **caractérisée en ce que** le liant polyacrylate présente à 130 °C une viscosité zéro d'au plus 40 Pa s, de préférence d'au plus 20 Pa s.

13. Masse insonorisante selon l'une quelconque des revendications précédentes, **caractérisée en ce que** le liant polyacrylate est fabriqué

(a1) à hauteur d'au moins 80 % en poids à partir de (méth)acrylates d'alkyle en C1 à C10 et
(a2) à hauteur de 0,5 à 20 % en poids à partir de monomères contenant des groupes polaires, les groupes polaires étant choisis parmi les groupes acide carboxylique, les groupes amide d'acide carboxylique, les groupes pyrrolidone, les groupes uréthane, les groupes urée, les groupes anhydride, les groupes sulfate, les groupes sulfonate, les groupes phosphate et les groupes phosphonate.

14. Masse insonorisante selon l'une quelconque des revendications précédentes, **caractérisée en ce que** le liant polyacrylate est fabriqué à partir de (méth)acrylate de méthyle, d'au moins un acrylate d'alkyle en C2 à C4 et d'acide (méth) acrylique, ainsi qu'éventuellement d'au moins un autre monomère choisi parmi le méthacrylate d'allyle,

l'acrylate de dihydrocyclopentadiène et le styrène.

**15.** Masse insonorisante selon l'une quelconque des revendications précédentes, **caractérisée en ce que** le liant polyacrylate est fabriqué à partir de

(i) 0 à 99 % en poids de (méth)acrylate de méthyle,
(ii) 0 à 99 % en poids d'au moins un acrylate d'alkyle en C2 à C10,
(iii) 0,5 à 15 % en poids d'acide (méth)acrylique,
(iv) 0 à 25 % en poids, de préférence 0,1 à 10 % en poids d'un acrylate d'alkyle polyéthyléniquement insaturé, de préférence le méthacrylate d'allyle ou l'acrylate de dihydrocyclopentadiényle, et
(v) 0 à 30 % en poids de styrène.

**16.** Masse insonorisante selon l'une quelconque des revendications précédentes, contenant :

(a) 5 à 35 % en poids du liant polyacrylate,
(b) 40 à 90 % en poids de charges inorganiques,
(c) 1 à 35 % en poids du composé polymérisable par voie radicalaire,
(d) 0,01 à 10 % en poids d'initiateur,
(e) de 0 à 20 % en poids de solvants ayant un point d'ébullition supérieur à 160 °C, et
(f) 0 à 50 % en poids d'autres adjuvants.

**17.** Masse insonorisante selon l'une quelconque des revendications précédentes, **caractérisée en ce que** les charges inorganiques sont choisies parmi le kaolin, la craie, le sulfate de baryum, le noir de carbone, le graphite, le talc, les minéraux argileux, la microdolomite, la farine de quartz et le mica, et les adjuvants sont utilisés à hauteur d'au moins 0,1 % en poids et sont choisis parmi les agents de réticulation, les épaississants, les additifs rhéologiques, les résines, les plastifiants, les agents antimousse, les conservateurs, les agents antigel et les dispersants de pigments.

**18.** Masse insonorisante selon l'une quelconque des revendications précédentes, **caractérisée en ce que** la masse insonorisante est exempte de solvants organiques ayant un point d'ébullition inférieur à 120 °C à pression normale.

**19.** Utilisation d'une masse insonorisante selon l'une quelconque des revendications précédentes pour l'amortissement des oscillations de parties de carrosserie d'un véhicule automobile.

**20.** Procédé d'amortissement des vibrations ou des oscillations de composants de véhicules automobiles ou de machines, selon lequel

(1) une masse insonorisante selon l'une quelconque des revendications 1 à 18 est mise à disposition et
(2) la masse insonorisante est appliquée sur un composant d'un véhicule automobile ou d'une machine et éventuellement séchée et/ou réticulée.

**21.** Substrat au moins partiellement revêtu avec une masse insonorisante selon l'une quelconque des revendications 1 à 18.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1935941 A
- EP 1520865 A
- WO 2007034933 A
- WO 0190264 A
- DE 102006052282
- EP 2420412 A
- US 2012027941 A
- WO 2013174611 A
- WO 2008049932 A
- WO 2008049805 A